# EUROPÄISCHE PATENTANMELDUNG

(11) **EP 0 763 419 A2**
(43) Veröffentlichungstag der Anmeldung: **19.03.1997**
(21) Anmeldenummer: 96113168.7
(22) Anmeldetag: 16.08.1996
(51) Int. Cl.: B32B 15/08

(54) **Verbundwerkstoffe aus Direktextrusion**

(30) Priorität: 14.09.1995 DE 19534011
(71) Anmelder: BASF Lacke + Farben AG, 48165 Münster-Hiltrup (DE)
(72) Erfinder: Kiriazis, Leonidas, Dr., 48165 Münster (DE)
(74) Vertreter: Fitzner, Uwe, Dr.

(57) **Zusammenfassung**

Verbundwerkstoffe aus mindestens einer Kunststoffschicht auf einem Träger, ggf. mit einer zwischenliegenden Schicht eines Haftvermittlers oder Klebers, hergestellt durch Direktextrusion des geschmolzenen Kunststoffes und/oder Haftvermittlers unmittelbar auf den Träger und anschließende Weiterverarbeitung.

## Beschreibung

Die vorliegende Erfindung betrifft einen Verbundwerkstoff aus mindestens einer Polypropylen-Kunststoffschicht auf einem Träger, ggf. mit einer zwischenliegenden Schicht eines Haftvermittlers oder Klebers.

Der Herstellung einer ausreichenden Adhäsionsverbindung im Verbund zwischen einer Kunststoffbeschichtung und einem Trägermaterial kommt für die Haltbarkeit des Endmaterials zentrale Bedeutung zu. Das hierfür angewendete Herstellungsverfahren bestimmt daher letztendlich, welches Endprodukt erhalten wird. Das nach dem Stand der Technik am häufigsten anzutreffende Beschichtungsverfahren ist das Aufbringen (Laminieren, Kaschieren) einer vorgefertigten Kunststoffolie. Für einige wenige Spezialfälle wird dagegen auch die sog. Direktextrusion beschrieben, d.h. das Aufbringen von plastifiziertem Kunststoff aus einem Extruder unmittelbar auf den zu beschichtenden Träger. So beschreibt z.B. die EP 0 038 075 das Aufbringen eines Films aus Polyethylen bzw. Polypropylen auf einen Träger. Dieser Träger hat einen komplexen Aufbau aus mehreren Materialschichten, deren Dicke insgesamt ein Mehrfaches der Dicke der Kunststoffbeschichtung beträgt.

Auch die EP 031 701 beschreibt die Erzeugung eines Kunststofflaminates, bei dem eine Komponente, nämlich der Haftvermittler, durch Direktextrusion aufgebracht wird. Er wird in geschmolzener Form zwischen Trägermetall und Kunststoffolie gegeben und dort durch Presswalzen verteilt.

Die genannten Anwendungen der Direktextrusion betreffen die Verwendung spezieller Träger- und Beschichtungsmaterialien. Dies hat seinen Grund darin, daß die Gewährleistung einer akzeptablen Produktqualität, d.h. insbesondere einer ausreichenden und gleichmäßigen Beschichtungsdicke, mit der Direktextrusionsmethode problematisch ist. Die Verwendung vorgefertigter Folien bekannter Schichtstärke führt demgegenüber mit großer Sicherheit zu einem Produkt der gewünschten Eigenschaften. Daher wird das letztgenannte Verfahren im Stand der Technik fast ausschließlich angewandt, während gegen die Direktextrusion erhebliche Vorurteile bestehen.
Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführte Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu Dosen oder Verschlüssen auftretenden mechanischen Beanspruchungen, etwa beim Verformen, Stanzen, Bördeln, Sicken u.ä., standhalten.

Als häufiges Verfahren für die Beschichtung von Blechen, die insbesondere zur Herstellung von Lebensmittelverpackungen eingesetzt werden, wird die Folienbeschichtung von Metallblechen eingesetzt. So ist beispielsweise in der DE-OS 3128641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird. Weiterhin sind auch aus der DE-OS 2912023, der GB-A-2027391 und der EP-B-31701 Laminate und aus diesen Laminaten hergestellte Lebensmittelverpackungsbehälter, insbesondere Beutel, bekannt.
Nachteilig an diesen Verfahren ist, daß zuerst eine eigenständige Kunststoffolie hergestellt werden muß, die insbesondere eine gewisse Mindestdicke haben muß, um tragfähig zu sein.

Die vorliegende Erfindung hat sich gegenüber dem bekannten Stand der Technik die Aufgabe gestellt, neue Verbundwerkstoffe zu entwickeln, die verbesserte Hafteigenschaften zwischen Träger und Beschichtung haben und deren Mindestbeschichtungsdicke verringert ist, d.h. mit denen dünnere Kunststoffschichten hergestellt werden können als nach dem Stand der Technik.

Diese Aufgabe wird gelöst durch einen Verbundwerkstoff aus einer Polypropylenschicht auf Metall mit einer zwischenliegenden Schicht aus Haftvermittler oder Kleber, wobei der Verbund erhalten wird durch Direktextrusion des geschmolzenen Kunststoffes und/oder Haftvermittlers unmittelbar auf das Metall und anschließender Weiterverarbeitung, vorzugsweise durch Pressen, Kühlen und/oder Glätten.
Insbesondere kann der erfindungsgemäße Verbundstoff bestehen aus der Schichtfolge Polypropylenfolie-Haftvermittler-Metall, wobei
1) als Haftvermittler mit Carboxylgruppen und/oder Anhydridgruppen modifiziertes Polypropylen verwendet wird,
und
2a) zur Herstellung des Polypropylens Polypropylen-Random- Copolymerisate aus 90 bis 99 Gew.-%, bevorzugt 93 bis 99 Gew.-%, Propylen und 1 bis 10 Gew.-%, bevorzugt 1 bis 7 Gew.-%, Comonomeren mit einer Molmassenverteilung M_{w} : Mₙ im Bereich von 2 bis 10, bevorzugt 3 bis 6, und einem Schmelzindex MFI 230°C/2,16 kg im Bereich von 1 bis 20 g/10 min, bevorzugt im Bereich von 4 bis 15 g/10 min, verwendet werden, oder
2b) zur Herstellung des Polypropylens Polypropylen-Random- Copolymerisate aus 1 bis 4 Gew.-% Ethylen und 99 bis 96 Gew.-% Propylen, bezogen auf das Monomerengesamtgewicht, mit einer Molmassenverteilung M_{w} : Mₙ im Bereich von 3 bis 6 und einem Schmelzindex MFI 230°C/2,16 kg im Bereich von 5 bis 9 g/10 min verwendet werden, oder
2c) zur Herstellung des Polypropylens Polypropylen-Random- Copolymerisate aus 90 bis 97 Gew.-% Propylen, 2 bis 5 Gew.-% Ethylen und 1 bis 6 Gew.-% Buten-1, jeweils bezogen auf das Monomerengesamtgewicht, mit einer Molmassenverteilung M_{w} : Mₙ im Bereich von 3 bis 6 und einem Schmelzindex MFI 230°C/2,16 kg im Bereich von 4 bis 8 g/10 min verwendet werden.

Vergleichbare Verbundstoffe sind in der DE-42 29 419 beschrieben, allerdings ohne den charakteristischen Herstellungsschritt der Direktextrusion. Die erfindungsgemäßen Polypropylendeckschicht-Haftvermittler-Metall-Verbunde haben den Vorteil einer verbesserten Haftung auf dem Substrat. Außerdem können sie in geringeren Schichtdicken aufgetragen werden, da der Zwischenschritt einer Folienherstellung entfallen kann. Die hieraus resultierende Folie muß nämlich eine Mindestsdicke haben, um sich selbst tragen zu können. In der Regel kann die Dicke der Folie daher ca. 18 µm nicht unterschreiten. Bei der Direktextrusion existieren derartige Begrenzungen nicht, es können daher geringere Schichtdicken, z.B. 1-5 µm, aufgetragen werden. Neben veränderten Materialeigenschaften kann somit eine erhebliche Materialersparnis erzielt werden. Da der Kunststoff nicht mehr in Form einer Folie hergestellt werden muß bevor er auflaminiert wird, kann durch die Direktextrusion ein kompletter Produktionsschritt entfallen. Dies führt natürlich zu einer erheblichen Kostenersparnis.

Ferner weisen die erfindungsgemäßen Polypropylendeckschicht-Haftvermittler-Metall-Verbunde keine Weißbruchneigung mehr auf.

Zur Herstellung der erfindungsgemäßen beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.

Anstelle von Metallblechen als Beschichtungsträger können grundsätzlich auch Kunststoffe, z.B. Polyethylen oder Polypropylen, verwendet werden.

Die als Deckschicht der Verbunde verwendeteten thermoplastischen Polypropylene können Polypropylen-Random-Copolymerisate auch in Form einer Folie oder eines Films sein. Dabei kann es sich auch um zusammengesetzte Folien und Filme (Verbundfolie und -filme) handeln, die beispielsweise erhalten werden durch gemeinsames Extrudieren verschiedener Polypropylen-Random-Copolymerisate. Derartige Polypropylenfolien werden nach bekannten Verfahren (Blasverfahren, Chill-roll-Verfahren etc.) aus Granulaten der Polypropylene gefertigt.

Erfindungsgemäß sind zur Herstellung der Polypropylenfolien der Polypropylenfolie-Haftvermittler-Metall-Verbunde statistische Polypropylen-Copolymerisate geeignet, die erhalten werden durch statistische Copolymerisation von 90 bis 99 Gew.-%, bevorzugt 93 bis 99 Gew.-%, Propylen und 1 bis 10 Gew.-%, bevorzugt 1 bis 7 Gew.-%, jeweils bezogen auf das Monomerengesamtgewicht, Comonomeren. Die statistischen Copolymere haben eine Molmassenverteilung Mw: Mn im Bereich von 2 bis 10, bevorzugt 3 bis 6, und einen Schmelzindex MFI 230°C/2,16 kg im Bereich von 1 bis 20 g/10 min, bevorzugt im Bereich von 4 bis 15 g/10 min (gemessen nach DIN 53 735). Derartige Polypropylene sowie Verfahren zu deren Herstellung sind bekannt.

Sie sind beispielsweise herstellbar durch das in der DE-A-37 30 022 beschriebene Polymerisationsverfahren unter Verwendung eines Ziegler-Natta-Katalysatorsystems. Die Propylencopolymerisate sind beispielsweise in einem Gasphasenpolymerisationsverfahren bei Temperaturen von 20 bis 160 °C und bei einem Druck von 1 bis 100 bar herstellbar. Die Molekulargewichte der Polymerisate lassen sich durch allgemein bekannte Maßnahmen regeln, zum Beispiel mittels Reglern, wie beispielsweise Wasserstoff.

Geeignete Comonomere sind beispielsweise C2- und C4- bis C12-a-Monoolefine, insbesondere C2- und C4-bis C6-a-Monoolefine, wie Ethen, Buten-1, 4-Methylpenten-1, Hexen-1, n-Okten-1, n-Decen-1 und n-Dodecen-1.

Als besonders geeignet zu nennen sind dabei Polypropylen-Random-Copolymerisate aus 1 bis 4 Gew.-% Ethylen und 99 bis 96 Gew.-% Propylen, jeweils bezogen auf das Gesamtgewicht der Monomerenzusammensetzung, wobei die Random-Copolymerisate eine Molmassenverteilung Mw: Mn im Bereich von 3 bis 6 und einen Schmelzindex MFI 230°C/2,16 kg im Bereich von 5 bis 9 g/10 min (gemessen nach DIN 53 735) aufweisen. Diese Polypropylen-Copolymerisate haben einen Schmelzbereich von ca. 135 bis 155°C (ermittelt durch DSC). Bei Verwendung von Kunststoffolien auf Basis derartiger Polypropylene werden Kunststoffolie-Metall-Laminate erhalten, die keinerlei Weißbruch aufweisen.

Besonders bevorzugt sind weiterhin Polypropylen- Random-Copolymerisate aus 90 bis 97 Gew.-% Propylen, 2 bis 5 Gew.-% Ethylen und 1 bis 6 Gew.-% Buten-1, jeweils bezogen auf das Gesamtgewicht der Monomeren, die eine Molmassenverteilung Mw: Mn im Bereich von 3 bis 6 und einen Schmelzindex MFI 230°C/2,16 kg im Bereich von 4 bis 8 g/10 min aufweisen. Derartige Polypropylen-Random-Copolymerisate haben einen Schmelzbereich von 120°C bis 140°C (ermittelt durch DSC). Die Kunststoffolien, die aus diesen Polypropylenen erhältlich sind, führen zu Kunststoffolie-Metall-Laminaten, die ebenfalls keinerlei Weißbruchneigung aufweisen.

Alle angegebenen Werte für den Schmelzindex MFI beziehen sich auf die Messung gemäß DIN 53735.

Die zur Herstellung der erfindungsgemäßen Kunststoff- Metall-Verbunde verwendeten Polypropylen-Copolymerisate sind beispielsweise erhältlich unter der Handelsbezeichnung Novolen^{Û} 3225 MCX und Novolen^{Û} 3520 LX der Firma BASF AG.

Selbstverständlich können auch Mischungen der genannten Polypropylen-Copolymerisate, bevorzugt 1 : 1 Mischungen, zusammen zu einer Folie extrudiert werden.

Gemäß der vorliegenden Erfindung kann das zur Herstellung der Polypropylenfolie verwendete Polypropylen-Random-Copolymerisat bis zu 50 Gew.- % ersetzt werden durch Polypropylen-Homopolymerisat. In diesem Fall wird also eine Mischung aus statistischem Polypropylen-Copolymerisat und aus Polypropylen-Homopolymerisat zu einer Polypropylenfolie extrudiert. Wenn in der Kunststoffmischung mehr als 50 Gew.-% Polypropylen-Homopolymerisat verwendet wird, weisen die daraus hergestellten Metall-Kunststoff-Laminate eine gewisse Weißbruchneigung auf. Geeignete Propylen-Homopolymerisate haben eine Molmassenverteilung Mw : Mn im Bereich von 2 bis 10, einen Schmelzindex MFI 230°C/2,16 kg im Bereich von 1 bis 20 g/10 min (gemessen nach DIN 53 735) und einen Isotaxie-Index im Bereich von 80 bis 99 %, bevorzugt 90 bis 98 %.

Vorzugsweise wird eine Mischung aus dem beschriebenen statistischen Polyproplyen-Copolymerisat und einem Polypropylen-Homopolymerisat mit einer Molmassenverteilung Mw:Mn im Bereich von 3 bis 6 und einem Schmelzindex MFI 230 °C/2,16 kg im Bereich von 4 bis 15 g/10 min eingesetzt (gemessen nach DIN 53735). Der Isotaxie - Index dieser Polypropylen-Homopolymerisate liegt im Bereich von 80 bis 99 %, vorzugsweise im Bereich von 90 bis 98 %. Die Homopolymerisate sind bekannt und beispielsweise herstellbar durch das in der DE-A-3730022 beschriebene Polymerisationsverfahren.

Besonders bevorzugt sind Propylen-Homopolymerisate mit einer Molmassenverteilung Mw : Mn im Bereich von 3 bis 5 und einem Schmelzindex MFI 230⁰C/2,16 kg im Bereich von 10 bis 12 g/10 min (DIN 53 735).

Geeignete Propylen-Homopolymerisate sind beispielsweise erhältlich unter der Handelsbezeichnung Novolen^{Û} 1100 N und Novolen^{Û} 1125 N (BASF AG).

Die beschriebenen thermoplastischen Polypropylen-Kunststoffolien können noch übliche Additive, wie z.B. innere und äußere Gleitmittel, Antiblockmittel, Stabi-lisatoren, Antioxidantien, Pigmente, Kristallisationshilfsmittel und dergleichen enthalten. Diese Additive werden in den für die Herstellung, Verarbeitung, Kon-fektionierung und Anwendung notwendigen Mengen in Form von Pulver, Puder, Perlen oder direkt in dem Polymer eingearbeitet eingesetzt. Nähere Angaben zu den üblicherweise eingesetzten Mengen und Beispiele für geeignete Additive sind beispielsweise dem Buch Gächter-Müller, Kunststoffadditive, Carl-Hanser Verlag zu entnehmen.

Besonders vorteilhaft ist es, wenn die thermoplastische Polypropylenfolien bis zu 0,5 Gew.-%, bezogen auf das Gesamtgewicht der Folie, Erucasäureamid und/oder Ölsäureamid als Gleitmittel sowie bis zu 0,2 Gew.-%, bezogen auf das Gesamtgewicht der Kunststoffolie, Antiblockmittel, vorzugsweise Siliciumdioxid, sowie ggf. Antioxidantien und ggf. weitere Verarbeitungsstabilisatoren enthalten.

Als Antioxidantien werden bevorzugt Phenolderivate verwendet. Weitere geeignete Additive sind Titandioxid, Calciumcarbonat, Diatomeenerde, Calciumstearat sowie primäre und sekundäre Fettsäureamide. Als UV-Stabilisatoren werden beispielsweise UV-Stabilistoren vom HALS-Typ eingesetzt.

Die zwischen der Polypropylenträgerfolie und dem Metall angeordnete Haftvermittlerschicht kann ebenfalls die zuvor genannten Additive enthalten. Bevorzugt werden diese jedoch in die Polypropylenträgerfolie eingearbeitet.

In den erfindungsgemäßen Metall-Kunststoffolie-Laminaten stellen die Haftvermittler die Haftung zwischen dem Metallblech und der Kunstoffolie her. Der Haftvermittler-Kunststoff wird dabei zusammen mit dem Kunststoff für die Trägerfolie coextrudiert. Als Haftvermittler werden mit Carboxylgruppen und/oder Anhydridgruppen modifizierte Polypropylen-Kunststoffe verwendet. Dabei können die als Haftvermittler verwendeten Polypropylene auch Gruppen aufweisen, die zu COOH-Gruppen hydrolisierbar sind.

Geeignete haftungsvermittelnde Polypropylene sind beispielsweise herstellbar durch Copolymerisation von Propylen mit α,β-ethylenisch ungesättigten Carbonsäuren, den entsprechenden Anhydriden oder den entsprechenden Estern oder Halbestern mit 1 bis 8 Kohlenstoffatomen im Alkoholrest. Als Carbonsäuren bzw. deren Anhydride kommen Acrylsäure, Methacrylsäure, Crotonsäure, Itaconsäure, Akonitsäure, Maleinsäure, Maleinsäureanhydrid, Zitraconsäure bzw. deren Anhydrid, Methylhydrogenmaleat und Methylhydrogenfumarat in Frage. Bevorzugt sind Acrylsäure und Methacrylsäure.

Geeignete copolymerisierbare Ester sind Ester α,β-ethylenisch ungesättigter Carbonsäuren mit 1 bis 8 C-Atomen im Alkoholrest. Bevorzugt wird dabei n-Butylacrylat verwendet.

Üblicherweise liegt die Säurekonzentration im Bereich von 5 bis 15 %.

Die säuremodifizierten Polypropylene sowie Verfahren zu deren Herstellung sind beispielsweise in der EP-A-312302 beschrieben.

Zur Herstellung der Haftvermittlerschicht geeignet sind ebenfalls Polypropylen-Pfropfcopolymerisate, die herstellbar sind durch Pfropfung von ethylenisch ungesättigten Carbonsäuren oder deren Anhydriden, wie zum Beispiel Maleinsäureanhydrid, auf Polypropylen in üblichen Mischern oder Extrudern.

Die Pfropfcopolymerisate können dadurch hergestellt werden, daß man die Basismaterialien mit Peroxiden umsetzt oder starken mechanischen Beanspruchungen unterwirft, dadurch Radikale erzeugt und sie mit geeigneten Monomeren in Kontakt bringt. Nach dem britischen Patent 679 562 können die Radikale durch Hochgeschwindigkeitsrührer, Schütteln, Mahlen, Kneten, Ultraschallschwingungen oder Passieren von Filtern bzw. Kapillarrohren mit hohen Lineargeschwindigkeiten erzeugt werden. Dadurch erfolgt ein Abbau des Polymeren, wobei reaktive Radikale gebildet werden, an denen eine Pfropfreaktion stattfinden kann.
In üblichen Extrudern kann eine Pfropfung durchgeführt werden, wenn man dem Reaktionsgemisch geeignete Initiatoren wie organische Peroxide zusetzt und die Umsetzung in einer z.B. in den US-Patenten 38 62 265, 39 53 655 und 40 01 172 beschriebenen speziellen Reaktionszone durchführt.

Die Radikale können thermisch, mittels energiereicher Strahlung oder mechanochemisch, z.B. im Scheibenextruder, erzeugt werden.

In der DE-A-36 39 564 ist ein peroxidfreies Verfahren zur Herstellung von Pfropfpolymeren von Polyolefinen beschrieben. Dieses Verfahren wird bevorzugt zur Herstellung der in den erfindungsgemäßen Verbunden verwendeten Haftvermittlern eingesetzt. Dieses peroxidfreie Verfahren hat insbesondere den Vorteil, daß keine unerwünschten Abbau- und Vernetzungsreaktionen stattfinden. Des weiteren tritt bei diesem Verfahren keine Beeinträchtigung der Polymeren in Farbe und Geruch auf, außerdem nimmt bei Verwendung von Peroxiden bei der Pfropfreaktion die Haftfähigkeit der erhaltenen Materialien gegenüber polaren Substanzen, wie Metallen, ab.

Als ethylenisch ungesättigte Carbonsäuren und/oder deren Derivate kommen insbesondere die üblichen Verbindungen, wie Maleinsäure, Fumarsäure, Itaconsäure, Acrylsäure, Acrylsäureanhydrid, Methacrylsäure, Crotonsäure, Maleinsäureanhydrid, Itaconsäureanhydrid in Betracht. Bevorzugte Verbindungen sind Maleinsäure, Fumarsäure und insbesondere Maleinsäureanhydrid.

Die zu pfropfenden Monomeren werden i.a. im Konzentrationsbereich von 0,01 bis 0,5 Gew.-%, bezogen auf die Polymermischung eingesetzt. Im allgemeinen werden dabei die zu pfropfenden Monomeren der aufgeschmolzenen Polymermischung zugemischt, und die Pfropfreaktion wird im Temperaturbereich von etwa 200°C bis etwa 300°C in üblichen Extrudern bei einem Druck von 1 bis etwa 500 bar durchgeführt.

Mit ethylenisch ungesättigten Carbonsäuren oder Carbonsäureanhydriden gepfropfte Polypropylene sind beispielsweise beschrieben in EP-A-385 645, US 4,957,820, US 4,980,210, EP-A-312 306 und EP-A-312302.

Die Basispolypropylene, auf die gepfropft wird, sind übliche Polypropylen-Homopolymerisate, Polypropylen-Random-Copolymerisate, Polpropylen-Blockcopolymerisate oder Polypropylen-Random-Blockcopolymerisate. So sind unter Polypropylen-Random-Copolymensate statistische Copolymerisate des Propylens mit 1 bis etwa 10 Gew.-% Comonomeren zu verstehen. Geeignete Comonomere sind C2- bis C12-, insbesondere C2- bis C6-a-Mono-olefine.

Unter den sog. Polypropylen-Blockcopolymerisaten sind Mischungen aus Polypropylen-Homopolymerisat und Propylen-Comonomer-Kautschuk zu verstehen. Im allgemeinen haben sie einen Kautschukgehalt von 15 bis 40 %. Sie sind herstellbar, indem zunächst Propylen homopolymerisiert wird und in einer zweiten Stufe ein Gemisch aus Propylen und den Comonomeren dem Polypropylen-Homopolymerisat hinzupolymerisiert wird. Propylen-Ethylen-Blockcopolymerisate sind beispielsweise beschrieben in der EP-A-131 268. Unter Polypropylen-Random-Blockcopolymerisaten sind Copolymerisate zu verstehen, deren Matrixmaterial aus Propylen-Random-Copolymerisat besteht. Von üblichen Polypropylen-Blockcopolymeflsaten, die als Matrixmaterial Propylen-Homopolymerisat aufweisen, unterscheiden sich die Propylen-Random-Blockcopolymerisate durch höhere Flexibilität, Zähigkeit und bessere Verschweißbarkeit.

Die als Haftvermittler geeigneten Pfropfpolymerisate können ggf. zusammen mit nicht-gepfropfen Polypropylenen eingesetzt zu werden. Um eine gute Haftung zwischen der Polypropylen-Deckschicht und dem Metall zu erreichen, ist es jedoch notwendig, daß der Gehalt an ungesättigter Carbonsäure bzw. deren Derivaten mindestens bei 0,05 % liegt.

Besonders bevorzugt werden in den erfindungsgemäßen Verbunden Haftvermittler verwendet, die ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Blockcopolymeflsat enthalten.
Bevorzugt sind weiterhin Haftvermittler, die ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Copolymeflsat aus 1 bis 10 Gew.-%, bevorzugt 1 bis 7 Gew.-%, bezogen auf das Monomerengesamtgewicht, Ethylen und/oder C4- bis C10-a-Monoolefinen enthalten. Als Beispiele für geeignete C4- bis C10-a-Monoolefine sind Buten-1, 4-Methylpenten-1, Hexen-1, n-Okten-1 und n-Decen-1 zu nennen.

Wie bereits erwähnt, sind thermoplastische Verbundfolien einsetzbar, die nur aus einer Haftvermittler- und einer Deckschicht bestehen, es sind aber auch Verbundfolien aus mehreren Schichten einsetzbar. In diesem Fall können die verschiedenen thermoplastischen Schichten aus jeweils gleichem oder aber verschiedenem Material in gleicher oder unterschiedlicher Schichtdicke bestehen.

Schließlich sei noch darauf hingewiesen, daß es auch möglich ist, das Metallblech an der dem Füllgut abgewandten Seite ebenfalls mit einer bevorzugt planebenen, thermoplastischen Verbundfolie oder aber mit einem flüssigen oder pulverförmigen Beschichtungsmittel zu beschichten.

Die erfindungsgemäßen Polypropylendeckschicht-Haftvermittler-Metall-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden. Bezüglich näherer Einzelheiten wird daher auf die bereits zitierte Literatur verwiesen.

Die erfindungsgemäßen Polypropylenfolie-Haftvermiftler-Metall-Verbunde zeigen praktisch keinen Weißbruch mehr, desweiteren sind die Haftungen zwischen dem Metall und dem Haftvermittler einerseits und der Polypropylen-Kunststoffolie und dem Haftvermittler andererseits gegenüber dem bisherigen Stand der Technik erheblich verbessert. Die Polypropylendeckschichten schützen das Metall sehr gut vor dem Angriff des Füllgutes, wobei eine Beeinflussung des Füllgutes durch Korrosionsprodukte des Metalles ebenfalls verhindert wird. Eine Beeinträchtigung des Füllgutes durch herausgelöste Bestandteile der Polypropylendeckschichtfolie ist bei Sterilisation und Lagerung der verpackten Güter nicht festzustellen.

Die Erfindung betrifft auch einen Verbundwerkstoff bestehend aus der Schichtfolge Metallblech-Polyurethanklebstoff-Polypropylencopolymerisat, wobei
1) die Klebstoffschicht aus einem lösemittelhaltigen Zweikomponenten-Polyurethanklebstoff erhalten wird,
und
2a) der Polypropylencopolymerisat-Kunststoff im wesentlichen oder vollständig besteht aus statistischem Polypropylencopolymerisat, welches erhältlich ist durch statistische Copolymerisation von 1 bis 8 Gew.-% Ethylen und 99 bis 92 Gew.-% Propylen, bezogen auf das Gesamtgewicht der Monomerenzusammensetzung, wobei das Polypropylencopolymerisat eine Molmassenverteilung M_{w} : Mₙ im Bereich von 2 bis 8 und einen Schmelzindex MFI 230°C/2,16 kg im Bereich von 6 bis 10 g/10 min aufweist, oder
2b) der Polypropylencopolymerisat-Kunststoff im wesentlichen oder vollständig besteht aus statistischem Polypropylencopolymerisat aus 2 bis 4 Gew.-% Ethylen und 98 bis 96 Gew.-% Propylen, bezogen auf das Gesamtgewicht der Monomerenzusammensetzung, mit einer Molmassenverteilung M_{w} : Mₙ im Bereich von 3 bis 4 und einem Schmelzindex MFI 230°C/2,16 kg im Bereich von 7 bis 9 g/10 min,
und
3) der Verbund erhalten wird durch Direktextrusion des geschmolzenen Kunststoffes und/oder Haftvermittlers unmittelbar auf das Metall und anschließender Weiterverarbeitung, vorzugsweise durch Pressen, Kühlen und/oder Glätten.

Vergleichbare Verbundstoffe sind in der DE-42 17 935 beschrieben, allerdings ohne den charakteristischen Herstellungsschritt der Direktextrusion.

Verbunde von Metallfolien mit Polyolefin- bzw. Polypropylenfolien sind in einer Vielzahl bekannt. Als Haftvermittler werden beispielsweise polarmodifizierte, z.B. mit Carbonsäuren oder Carbonsäureanhydriden gepfropfte Polypropylene eingesetzt. Derartige Verbunde sind z.B. beschrieben in der EP-A-101 250 und der EP-A-312 306. Weiterhin ist es bekannt, Metallblech-Polypropylenkunststoffolie-Verbunde herzustellen unter Verwendung von lösemittelhaltigen Zweikomponenten-Polyurethanldebstoffen. Bei Polypropylenkunststoffolie-Metallblech-Verbunden tritt jedoch das Problem auf, daß die mit dem Metall verklebten Kunststofffolien eine Neigung zu Weißbruch haben. Ansonsten weisen Polypropylen-Kunststoffolien eine größere Chemikalienbeständigkeit auf als Polyethylen- Kunststoffolien.

Der erfindungsgemäße Verbundwerkstoff hat demgegenüber erheblich verbesserte Eigenschaften. Die Vorteile der erfindungsgemäßen Metallblech-2K-Polyurethanklebstoff-schicht-Polypropylencopolymerisat-Kunststof-Verbunde sind - neben der verbesserten Haftung und geringeren Mindestschichtdicke - insbesondere darin zu sehen, daß die Verbunde keine Weißbruchneigung nach dem Verformen zu einem Verpackungsbehälter aufweisen.

Zur Herstellung der erfindungsgemäßen beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind. Je nach Anwendungszweck sind auch Metallstärken von mehr als 1 mm möglich.

Die Metallbleche werden mit dem thermoplastischen Polypropylenkunststoff beschichtet, wobei dessen Haftung auf dem Metallblech mittels eines Polyurethan-Klebstoffes bewerkstelligt wird.

Die verwendeteten thermoplastischen Polypropylene können statistische Polypropylen-Copolymerisate sein, auch in Form einer Folie oder eines Films. Dabei kann es sich auch um zusammengesetzte Folien und Filme (Verbundfolie und -filme) handeln, die beispielsweise erhalten werden durch gemeinsames Extrudieren der Polypropylen-Random-Copolymerisate. Derartige Polypropylenfolien werden nach bekannten Verfahren (Blasverfahren, Chill-roll-Verfahren etc.) aus Granulaten der Polypropylene gefertigt.

Die Polypropylencopolymerisat-Kunststoffolie des erfindungsgemäßen Verbundes besteht vollständig oder im wesentlichen aus statistischem Polypropylencopolymerisat, welches erhältlich ist durch statistische (Random-) Copolymerisation von 1 bis 8 Gew.-%. Ethylen und 99 bis 92 Gew.-% Propylen, bezogen auf das Gesamtgewicht der Monomerenzusammensetzung.
Ggf. können noch weitere Comonomere bei der radikalischen Polymerisation verwendet werden, wie beispielsweise C4- bis C12 -a- Monoolefine, wie Buten-1, 4-Methylpenten-1, Hexen-1, n-Okten-1, n-Decen-1 und n-Dodecen-1. Wesentlich ist jedoch, daß die Copolymerisate zur Herstellung der Kunststoffolien aus 1 bis 8 Gew.-% Ethylen und 99 bis 92 Gew.-% Propylen erhalten werden.

Die Polypropylencopolymerisate haben eine Molmassenverteilung MW: Mn im Bereich von 2 bis 8 und einen Schmelzindex MFI 230°C/2,16 kg im Bereich von 6 bis 10 g/10 min (gemessen nach DIN 53 735).

Die Copolymerisate können beispielsweise hergestellt werden durch das in der DE-OS 37 30 022 beschriebene Polymerisationsverfahren unter Verwendung eines Ziegler-Natta-Katalysatorsysteme. Vorzugsweise werden sie durch das sog. Trockenphasenpolymerisationsverfahren bei Temperaturen von 20 bis 160°C und bei einem Druck von 1 bis 100 bar hergestellt. Die Molekulargewichte der Polymerisate lassen sich durch allgemein bekannte Maßnahmen regeln, z.B. mittels Wasserstoff als Polymerisationsregler.

Vorzugsweise werden die Kunststoffolien der erfindungsgemäßen Verbunde aus Polypropylencopolymerisaten erhalten, die hergestellt werden durch statistische Copolymerisation von 2 bis 4 Gew.-% Ethylen und 98 bis 96 Gew.-% Propylen, bezogen auf das Gesamtgewicht der Monomerenzusammensetzung, wobei die Random-Copolymerisate eine Molmassenverteilung M_{w} : Mₙ im Bereich von 3 bis 4 und einen Schmelzindex MFI 230°C/2,16 kg im Bereich von 7 bis 9 g/10 min aufweisen (gemessen nach DIN 53 735).

Die Polypropylencopolymerisate, die gemäß der vorliegenden Erfindung zur Herstellung der Metall-Kunststoffolie-Verbunde verwendet werden, haben einen Schmelzbereich von ca. 140°C bis ca. 150°C (ermittelt durch DSC). Sie sind beispielsweise erhältlich unter der Handelsbezeichnung Novolen^{Û} 3225 MCX (BASF AG).

Bevorzugt besteht der Kunststoff in dem erfindungsgemäßen Verbund vollständig aus dem zuvor beschriebenen Polypropylencopolymerisat. Es ist aber im Rahmen der Erfindung auch möglich, Mischungen des beschriebenen Copolymerisats und geringer Mengen anderer thermoplastischer Kunststoffe, vorzugsweise Polypropylene, zu extrudieren.

Der thermoplastische Polypropylen-Kunststoff des erfindungsgemäßen Verbundes kann noch übliche Additive, wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem Polymer eingearbeiteten Konzentrat eingesetzt. Nähere Angaben zu den üblicherweise eingesetzten Mengen und Beispiele für geeignete Additive sind beispielsweise dem Gächter-Müller, Kunststoffadditive, Carl-Hanser Verlag zu entnehmen.

Besonders vorteilhaft ist es, wenn das thermoplastische Polypropylen der Verbunde bis zu 0,5 Gew.-%, bezogen auf das Gesamtgewicht, Erucasäureamid und/oder Ölsäureamid als Gleitmittel sowie bis zu 0,2 Gew.-%, bezogen auf das Gesamtgewicht der Kunststoffolie, Antiblockmittel, vorzugsweise Siliciumdioxid, sowie ggf. Antioxidantien und ggf. weitere Verarbeitungsstabilisatoren enthält.

Als Antioxidantien werden bevorzugt Phenolderivate verwendet. Weitere geeignete Additive bzw. Verarbeitungsstabilisatoren sind Titandioxid, Calciumcarbonat, Diatomeenerde, Calciumstearat sowie primäre und sekundäre Fettsäureamide. Als UV-Stabilisatoren werden beispielsweise UV-Stabilistoren vom HALS-Typ eingesetzt.

Die zwischen der Polypropylencopolymerisat und dem Metallblech angeordnete Klebstoffschicht kann ebenfalls die zuvor genannten Additive enthalten. Bevorzugt werden diese jedoch in die Polypropylenkunststoffolie eingearbeitet.

Die zwischen dem Metallblech und der Polypropylencopolymerisat angeordnete Klebstoffschicht wird aus einem zweikomponentigen lösemittelhaltigen Polyurethanklebstoff erhalten. Zum Aufbringen des Klebstoffes auf das Metallblech kann jedes geeignete Verfahren angewendet werden. Der Zweikomponenten-Polyurethanklebstoff wird durch Auftragen aus Lösungen in organischen Lösemitteln aufgebracht. Die Lösungen haben in der Regel einen Klebstoffgehalt von 5 bis 80 Gew.-%. Die aufgebrachte Klebstoffmenge beträgt in der Regel etwa 1 bis 15 g/m² Fläche.

Der Zweikomponenten-Polyurethanklebstoff besteht aus einer OH-haltigen Komponente (I), zum Beispiel aus Polyesterpolyolen, Polyetherpolyolen oder niedermolekularen Polyolen, und aus einer isocyanatgruppenhaltigen Komponente (II). Die beiden Kompononten werden unmittelbar vor dem Auftrag auf das Substrat miteinander vermischt.

Bevorzugt werden als Komponente (I) des 2K-Klebstoffes Polyesterpolyole verwendet. Diese werden hergestellt durch Veresterung von Dicarbonsäuren mit überschüssigen Di- bzw. Polyolen.

Die Veresterung verläuft bei höherer Temperatur in Lösung oder in der Schmelze. Aus Dicarbonsäuren und Glykolen entstehen linear aufgebaute Polyester, während die Veresterung bei Mitverwendung von Triolen und/oder höherwertigen Polyolen zu mehr oder weniger verzweigten Polyestern führt. Die Polyesterpolyole sind erhältlich durch Umsetzung von Polycarbonsäuren oder deren veresterungsfähigen Derivaten, ggf. zusammen mit Monocarbonsäuren, Polyolen, ggf. zusammen mit Monoolen, sowie ggf. weiteren modifizierenden Komponenten.

Beispiele für geeignete Polycarbonsäuren sind Phthalsäure, Isophthalsäure, Terephthalsäure, Halogenphthalsäuren, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Cyclohexantetracarbonsäure und Cyclobutantetracarbonsäure.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxialkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert. Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten zur Herstellung der Polyester sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydoxiethylisocyanurat, Polyethylenglykol, Polypropylenglykol, gegebenenfalls zusammen mit einwertigen Alkoholen, wie beispielsweise Butanol, Octanol, Laurylalkohol, ethoxylierten bzw. propxylierten Phenolen.

Geeignete modifizierende Komponenten sind Polyisocyanate und/oder Diepoxidverbindungen, ggf. auch Monoisocyanate und/oder Monoepoxidverbindungen.

Als OH-Komponente (I) des Zweikomponenten-Polyurethan-klebstoffs sind auch Polyetherpolyole, die z.B. durch Anlagerung von Ethylenoxid oder Propylenoxid an geeignete Polyole erhältlich sind, geeignet.

Als isocyanatgruppenhaltige Komponente (II) des Polyurethanklebstoffes sind beispielsweise geeignet:

Aromatische Isocyanate, wie z.B. 2,4-, 2,6-Toluylendi-isocyanat und deren Gemische, 4,4'-Diphenylmethandiiso-cyanat, m-Phenylen-, p-Phenylen-, 4,4-Diphenyl-, 1,5-Naphthalin-, 1,4-Naphthalin-, 4,4-Toluidin-, Xylylendiisocyanat sowie substituierte aromatische Systeme, wie z.B. Dianisidindiisocyanate, 4,4-Diphenyletherdiisocyanate oder Chlorodiphenylendiisocyanate und höherfunktionelle aromatische Isocyanate, wie z.B. 1,3,5-Triisocyanatobenzol, 4,4', 4''-Triisocyanattriphe-nylmethan, 2,4,6-Triisocyanatotoluol und 4,4'-Diphenyl-dimethylmethan-2,2', 5,5'-tetraisocyanat; cycloaliphatische Isocyanate, wie z.B. 1,3-Cylocopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylentriisocyanat.

Weiterhin können als isocyanatgruppenhaltige Komponente (II) auch Präpolymere mit höherer Molmasse verwendet werden. Zu nennen sind hierbei Addukte aus Toluylendiisocyanat und Trimethylolpropan, ein aus 3 Molekülen Hexamethylendiisocyanat gebildetes Biuret sowie die Trimeren des Hexamethylendiisocyanates und des 3,5,5-Trimethyl-1-isocyanato-3-isocyanatomethylcyclohexans.

Die Menge der Komponente (II) wird so gewählt, daß das Verhältnis der Isocyanatgruppen von (II) zu den OH-Gruppen (I) i. a. im Bereich von 1:3 bis 3:1 liegt.

Geeignete Isocyanatkomponenten (II) sind beispielsweise die auf dem Markt unter der Bezeichnung Desmodur^{Û} N und Desmodur^{Û} L (Bayer AG) erhältlichen Isocyanatlösungen. Geeignete Lösungsmittel für die Isocyanatkomponenten sind beispielsweise Butylacetat und Ethylacetat. Ein weiterer geeigneter 2K-Polyurethanklebstoff ist der unter der Handeisbezeichnung Adcote 549 B/Catalyst F der Firma Morton Internationl B.V. erhältliche Kleber.

Besonders bevorzugt wird als Zweikomponenten-Klebstoff ein OH-haltiger Polyester, der als Carbonsäurekomponente im wesentlichen oder vollständig Isophthalsäure und/oder Terephthalsäure enthält und als Isocyanatkomponente ein Polyurethanpräpolymer auf Basis von Toluylendiisocyanat verwendet. Der Polyester kann mit Di- und/oder Monoepoxidverbindungen modifiziert sein.

Schließlich sei noch darauf hingewiesen, daß es auch möglich ist, das Metallblech an der dem Füllgut abgewandten Seite ebenfalls zu beschichten.

Die erfindungsgemäßgen Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden Bezüglich näherer Einzelheiten wird daher auf die bereits zitierte Literatur verwiesen.

Die erfindungsgemäßen Polypropylen-Klebstoffschicht-Metallblech-Verbunde zeigen praktisch keinen Weißbruch mehr, des weiteren sind die Haftungen zwischen dem Metall und dem Polyurethan-Klebstoff einerseits und dem Polypropylen-Kunststoff und dem Polyurethan-Klebstoff andererseits deutlich besser als im vorbekannten Stand der Technik. Die Polypropylendeckschicht schützt das Metall sehr gut vor dem Angriff des Füllgutes, wobei eine Beeinflussung des Füllgutes durch Korrosionsprodukte des Metalles ebenfalls verhindert wird. Eine Beeinträchtigung des Füllgutes durch herausgelöste Bestandteile der Polypropylendeckschichtfolie ist bei der Sterilisation und Lagerung der verpackten Güter nicht festzustellen.

## Patentansprüche

1. Verbundwerkstoff aus einer Polypropylenschicht auf Metall mit einer zwischenliegenden Schicht aus Haftvermittler oder Kleber,
dadurch gekennzeichnet, daß
der Verbund erhalten wird durch Direktextrusion des geschmolzenen Polypropylens und/oder Haftvermittlers unmittelbar auf das Metall und anschließende Weiterverarbeitung, vorzugsweise durch Pressen, Kühlen, Glätten und/oder Stanzen.

2. Verbundwerkstoff nach Anspruch 1,
dadurch gekennzeichnet, daß
1) als Haftvermittler mit Carboxylgruppen und/oder Anhydridgruppen modifiziertes Polypropylen verwendet wird,
und
2a) zur Herstellung des Polypropylens Polypropylen-Random-Copolymerisate aus 90 bis 99 Gew.-%, bevorzugt 93 bis 99 Gew.-%, Propylen und 1 bis 10 Gew.-%, bevorzugt 1 bis 7 Gew.-%, Comonomeren mit einer Molmassenverteilung M_{w} : Mₙ im Bereich von 2 bis 10, bevorzugt 3 bis 6, und einem Schmelzindex MFI 230°C/2,16 kg im Bereich von 1 bis 20 g/10 min, bevorzugt im Bereich von 4 bis 15 g/10 min, verwendet werden, oder
2b) zur Herstellung des Polypropylens Polypropylen-Random-Copolymerisate aus 1 bis 4 Gew.-% Ethylen und 99 bis 96 Gew.-% Propylen, bezogen auf das Monomerengesamtgewicht, mit einer Molmassenverteilung M_{w} : Mₙ im Bereich von 3 bis 6 und einem Schmelzindex MFI 230°C/2,16 kg im Bereich von 5 bis 9 g/10 min verwendet werden, oder
2c) zur Herstellung des Polypropylens Polypropylen-Random-Copolymerisate aus 90 bis 97 Gew.-% Propylen, 2 bis 5 Gew.-% Ethylen und 1 bis 6 Gew.-% Buten-1, jeweils bezogen auf das Monomerengesamtgewicht, mit einer Molmassenverteilung M_{w} : Mₙ im Bereich von 3 bis 6 und einem Schmelzindex MFI 230°C/2,16 kg im Bereich von 4 bis 8 g/10 min verwendet werden.

3. Verbundwerkstoff nach Anspruch 2,
**dadurch gekennzeichnet**, daß
das zur Herstellung des Polypropylens verwendete Polypropylen-Random-Copolymerisat bis zu 50 Gew.-% ersetzt worden ist durch Polypropylen-Homopolymerisat, wobei vorzugsweise das verwendete Polypropylen-Homopolymerisat eine Molmassenverteilung M_{w} : Mₙ im Bereich von 3 bis 6 und einen Schmelzindex MFI 230°C/2,16 kg im Bereich von 4 bis 15 g/10 min aufweist.

4. Verbundwerkstoff nach einem der Ansprüche 2 oder 3,
**dadurch gekennzeichnet**, daß
das Polypropylen bis zu 0,5 Gew.-%, bezogen auf ihr Gesamtgewicht, Erucasäureamid und/oder Ölsäureamid sowie bis zu 0,2 Gew.-%, bezogen ihr Gesamtgewicht, Antiblockmittel, vorzugsweise SiO₂, sowie ggf. Antioxidantion und ggf. weitere Verarbeitungsstabilisatoren enthält.

5. Verbundwerkstoff nach einem der Ansprüche 2 bis 4,
**dadurch gekennzeichnet**, daß
als Haftvermittler ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Blockcopolymerisat verwendet wird, oder daß als Haftvermittler ein mit 0,1 bis 0,5 Gew.-%, bevorzugt 0,2 bis 0,4 Gew.-%, Maleinsäureanhydrid gepfropftes Polypropylen-Random-Copolymerisat aus 1 bis 10 Gew.-%, bevorzugt 1 bis 7 Gew.-%, bezogen auf das Monomerengesamtgewicht, Ethylen und/oder C4- bis C10-a-Monoolefinen verwendet wird.

6. Verbundwerkstoff nach Anspruch 1,
dadurch gekennzeichnet, daß
1) die Klebstoffschicht aus einem lösemittelhaltigen Zweikomponenten-Polyurethanklebstoff erhalten wird,
und
2a) das Polypropylen ein Copolymerisat-Kunststoff ist und im wesentlichen oder vollständig besteht aus statistischem Polypropylencopolymerisat, welches erhältlich ist durch statistische Copolymerisation von 1 bis 8 Gew.-% Ethylen und 99 bis 92 Gew.-% Propylen, bezogen auf das Gesamtgewicht der Monomerenzusammensetzung, wobei das Polypropylencopolymerisat eine Molmassenverteilung M_{w} : Mₙ im Bereich von 2 bis 8 und einen Schmelzindex MFI 230°C/2,16 kg im Bereich von 6 bis 10 g/10 min aufweist, oder
2b) das Polypropylen ein Copolymerisat-Kunststoff ist und im wesentlichen oder vollständig besteht aus statistischem Polypropylencopolymerisat aus 2 bis 4 Gew.-% Ethylen und 98 bis 96 Gew.-% Propylen, bezogen auf das Gesamtgewicht der Monomerenzusammensetzung, mit einer Molmassenverteilung M_{w} : Mₙ im Bereich von 3 bis 4 und einem Schmelzindex MFI 230°C/2,16 kg im Bereich von 7 bis 9 g/10 min.

7. Verbundwerkstoff nach Anspruch 6,
**dadurch gekennzeichnet**, daß
der Polypropylenkunststoff bis zu 0,5 Gew.-%, bezogen auf sein Gesamtgewicht, Erucasäureamid und/oder Ölsäureamid sowie bis zu 0,2 Gew.-%, bezogen auf sein Gesamtgewicht, Antiblockmittel, bevorzugt SiO₂, sowie ggf. Antioxidantien sowie ggf. weitere Verarbeitungsstabilisatoren enthält.

8. Verbundwerkstoff nach Anspruch 6 oder 7,
**dadurch gekennzeichnet**, daß
als Zweikomponenten-Polyurethanklebstoff ein hydroxylgruppenhaltiger Polyester, der als Carbonsäurekomponente im wesentlichen oder vollständig Isophthalsäure und/oder Terephthalsäure enthält, und eine isocyanatgruppenhaltige Polyurethanpräpolymerzusammensetzung auf Basis von Toluylendiisocyanat verwendet wird.

9. Verwendung des Verbundwerkstoffes nach einem der Ansprüche 1 bis 8 zur Herstellung von Verpackungsbehältern, insbesondere zur Herstellung von Böden bzw. Deckeln von Dosen, Ventiltellern von Aerosoldosen sowie von Verschlüssen.
